# EUROPEAN PATENT SPECIFICATION

(11) **EP 3 168 967 B1**
(45) Date of publication and mention of the grant of the patent: **03.07.2019**
(21) Application number: 15838829.8
(22) Date of filing: 31.08.2015
(51) Int. Cl.: H02K 11/33, B62D 5/04, H02K 5/22

(54) **CONNECTING PART FOR ELECTRIC MOTOR AND ELECTIC MOTOR CONTROL DEVICE, CONNECTING STRUCTURE FOR ELECTRIC MOTOR AND ELECTRIC MOTOR CONTROL DEVICE USING THIS CONNECTING PART, AND ELECTRIC POWER STEERING DEVICE, ELECTRIC ACTUATOR, AND VEHICLE USING THIS CONNECTING STRUCTURE**
VERBINDUNGSTEIL FÜR ELEKTROMOTOR UND ELEKTROMOTORSTEUERUNGSVORRICHTUNG, VERBINDUNGSSTRUKTUR FÜR ELEKTROMOTOR UND ELEKTROMOTORSTEUERUNGSVORRICHTUNG MIT VERWENDUNG DIESES VERBINDUNGSTEILS UND SERVOLENKUNGSVORRICHTUNG, ELEKTRISCHER STELLANTRIEB UND FAHRZEUG MIT VERWENDUNG DIESER VERBINDUNGSSTRUKTUR
PIÈCE DE CONNEXION POUR MOTEUR ÉLECTRIQUE ET DISPOSITIF DE COMMANDE DE MOTEUR ÉLECTRIQUE, STRUCTURE DE CONNEXION POUR MOTEUR ÉLECTRIQUE ET DISPOSITIF DE COMMANDE DE MOTEUR ÉLECTRIQUE À L'AIDE DE CETTE PIÈCE DE CONNEXION, ET DISPOSITIF DE DIRECTION ASSISTÉE ÉLECTRIQUE, ACTIONNEUR ÉLECTRIQUE, ET VÉHICULE UTILISANT CETTE STRUCTURE DE CONNEXION

(30) Priority: 01.09.2014 JP 2014177239
(43) Date of publication of application: 17.05.2017
(73) Proprietor: NSK Ltd., Tokyo 141-8560 (JP)
(72) Inventor: ASADA, Toshiaki, Fujisawa-shi Kanagawa 251--8501 (JP); KIKUCHI, Yusuke, Fujisawa-shi Kanagawa 251--8501 (JP)
(74) Representative: Luten, Martin Haaije
(86) International application number: PCT/JP2015/074730
(87) International publication number: WO 2016/035755

(56) References cited:
- JP-A- 2009 196 627
- JP-A- 2011 229 227
- JP-A- 2011 239 675
- JP-A- 2012 239 295
- JP-A- 2013 090 532
- JP-A- 2013 207 963
- JP-A- 2013 226 015
- JP-A- 2013 247 729
- US-A1- 2009 079 281
- US-A1- 2012 286 604
- US-A1- 2013 099 609

## Description

### Technical Field

The present invention relates to a connection part between a motor (an electric motor) and a control unit for the motor and a connection structure between the motor and the control unit thereof using the same, in particular to a connection part between a motor and a control unit for the motor and a connection structure between the motor and the control unit thereof using the same in which a mechanical connection and an electrical connection between a housing of the motor and a housing of the control unit can be achieved by an integrally formed connection part.

### Background Art

Conventionally, a motor and a control unit of the motor may be arranged in positions adjacent to each other, and in the arrangement thereof, a precision of the position in the arrangement and an efficiency of operation required for the arrangement are regarded as important.

Then, as an example of such a motor and a control unit for the motor, for example, an electric power steering apparatus which reduces and assists a steering force of a vehicle which becomes a load of a driver is known.

The electric power steering apparatus described above is provided with a motor, a control unit which controls the motor and so on, and a housing of the motor, a housing of the control unit and so on are arranged in positions adjacent to each other as described above. For example, in an apparatus disclosed in Japanese Published Unexamined Patent Application No.2007-106234 A (Patent Document 1), a motor and a control unit serving as a control section thereof are arranged such that the motor and the control unit are adjacent to each other in a radial direction of a rotational shaft of the motor.

Then, in order to perform the adjacent arrangement as described above, in Patent Document 1, as shown in FIGs.10A and 10B, a mount surface for a motor 512 and a control unit 515U, a mount surface for a terminal base 515B used for an electrical connection with the motor arranged on the control unit, and a mount surface for a connector 515C to be mounted to the control unit are formed to be a uniform plane.

Further, in the apparatus disclosed in Patent Document 1, by adopting such a configuration described above, the mounting of the motor, the control unit and respective terminal connection members are precisely and efficiently performed, and reduction in a manufacturing cost is also achieved.

Document US2012/286604, which is seen as the closest prior art shows a connection part with all the features of the preamble of claim 1.

### The List of Prior Art Documents

### Patent Documents

Patent Document 1: Japanese Unexamined Patent Publication No.2007-106234 A

### Summary of the Invention

### Problems to be Solved by the Invention

However, as disclosed in Patent Document 1 described above, in a case in which the mutual arrangement of the motor and the control unit for the motor are not performed in a direction perpendicular to a rotational shaft of the motor but in a direction along a shaft center of the rotational shaft, it is difficult to arrange the mount surfaces of the respective components to be a uniform plane as disclosed in Patent Document 1.

Accordingly, in a case described above, a mounting error of components formed as different members in mounting the motor and the control unit is progressively accumulated, and therefore a position accuracy is deteriorated and a joining position between the motor and the control unit might be hardly matched, and a load might be also applied to an electrical connection portion.

Thus, in the conventional technique, when the motor and the control unit for the motor are arranged in the direction along the rotational shaft of the motor such that the control unit is arranged to be adjacent to the motor, there is a problem to arrange these devices precisely and efficiently.

In this connection, an object of the present invention is to solve the problem described above and to perform a connection between a motor and a control unit for the motor with a connection part configured as a single member formed such that a control unit mounting flange and a relay terminal are mainly formed integrally with each other, and thereby electrical connection and mechanical connection are efficiently performed with the single connection part and deterioration of a position accuracy due to a mounting error progressively accumulated is prevented and the connection between the motor and the control unit is more precisely and efficiently performed.

### Means for Solving the Problems

The present invention relates to a connection part for connecting a motor (an electric motor) and a control unit for the motor, the above-described object of the present invention is achieved by that the connection part comprising: a ring-shape control unit mounting flange; and a relay terminal to be mounted at an inner edge side of the ring-shape control unit mounting flange; wherein the relay terminal comprises a conductive body which electrically connects a conductive terminal formed to be protruded from the motor and a control terminal of the control unit, and a protection section which surrounds a periphery of the conductive terminal formed to be protruded from the motor.

Then, the above-described object of the present invention is achieved by that: wherein a ring-shape waterproof and dustproof member coaxially arranged with the ring-shape control unit mounting flange is provided at the inner edge side of the control unit mounting flange, and the ring-shape waterproof and dustproof member is formed so as to pass through an outer edge side of the relay terminal in a portion of the relay terminal to be mounted at the inner edge side.

Further, the present invention relates to a connection structure of a motor for connecting one connection surface of a housing of the motor and one connection surface of a housing of a control unit which controls the motor, the above-described object of the present invention is achieved by that: wherein a conductive terminal of the motor is provided to be protruded on the connection surface of the motor, and wherein the connection part according to Claim 1 or 2 is connected to the conductive terminal via one end of a conductive body of a relay terminal of the connection part, and the connection part is connected to the one connection surface of the housing of the motor so as to connect the motor and the control unit.

Furthermore, the present invention relates to a connection structure between a motor and a control unit of the motor for connecting one connection surface of a housing of the motor and one connection surface of a housing of the control unit which controls the motor, the above-described object of the present invention is achieved by that: wherein a conductive terminal of the motor is provided to be protruded on the connection surface of said motor, wherein the connection part according to Claim 1 or 2 is connected to the conductive terminal via one end of a conductive body of a relay terminal of the connection part and is connected to the one connection surface of the housing of the motor, wherein another end of the conductive body of said relay terminal is arranged to be protruded toward the control unit and the other end of the conductive body is connected to the control terminal of the control unit, and wherein the housing of the control unit is connected to the connection part at the one connection surface of the housing of the control unit.

The above-described object of the present invention is more effectively achieved by the electric power steering apparatus, or an electric actuator, or a vehicle by using the connection parts or the connection structure described-above.

### Effects of the Invention

According to the present invention, in a case in which the motor and the control unit for the motor are arranged in the direction along the rotational shaft of the motor such that the control unit is arranged to be adjacent to the motor, even if it is difficult to arrange the mount surfaces of the components formed as different members to be a uniform plane as disclosed in Patent Document 1, by adopting the connection part formed such that the control unit mounting flange for the mechanical connection and the relay terminal for the electrical connection are formed integrally as described above, or by adopting the connection structure using the connection part described above, it makes possible to perform the electrical connection and the mechanical connection efficiently by using the connection part formed as the single member.

Thus, progressive accumulation of the mounting error when the connections described above are performed by individual members can be canceled by the connection part formed as the single member formed integrally, and therefore the connection between the motor and the control unit for the motor can be more precisely and efficiently performed.

Further, in the connection part and in the connection structure, in a case in which the connection between the motor and the control unit is performed, by arranging a waterproof and dustproof member on the connection part, the waterproof and dustproof member is pressed and fitted between the connection part and a housing of the control unit and between the motor to which the connection part is connected and the control unit and thereby sealing between the apparatuses described above is performed, and therefore waterproofing and dustproofing can be performed effectively.

### Brief Description of the Drawings

In the accompanying drawings:
FIG.1 is a diagram showing a general configuration of an electric power steering apparatus;
FIG.2A is a perspective view of each component of a motor 200 and a connection part 100, FIG.2B is a perspective view of a control unit 300, FIG.2C is a perspective view of the connection part 100, and FIG.2D is a perspective view illustrating a structure in which the connection part and the motor are assembled;
FIG.3 is a cross-sectional view taken along line D-D of a control unit mounting flange shown in FIG.2A;
FIG.4 is a cross-sectional view take long line C-C of a relay terminal shown in FIG.2A;
FIG.5A is a perspective view of a waterproof and dustproof member, and FIG.5B is a perspective view in a case in which the waterproof and dustproof member is mounted to the control unit mounting flange;
FIGs.6A and 6B are diagrams illustrating examples of projections arranged along the waterproof and dustproof member, in which FIG.6A is a cross-sectional view including a triangular projection and FIG.6B is a cross-sectional view including a semicircular projection;
FIG.7 is a perspective view illustrating a specific connection procedure between the connection part 100 and the motor 200;
FIGs.8A and 8B are perspective views in a state in which a relay terminal portion of the connection member is fitted to a conductive terminal portion of the motor, when seen from respectively different directions;
FIG.9 is a perspective view of a structure in which a resolver is arranged at a center portion of a connection surface of the motor; and

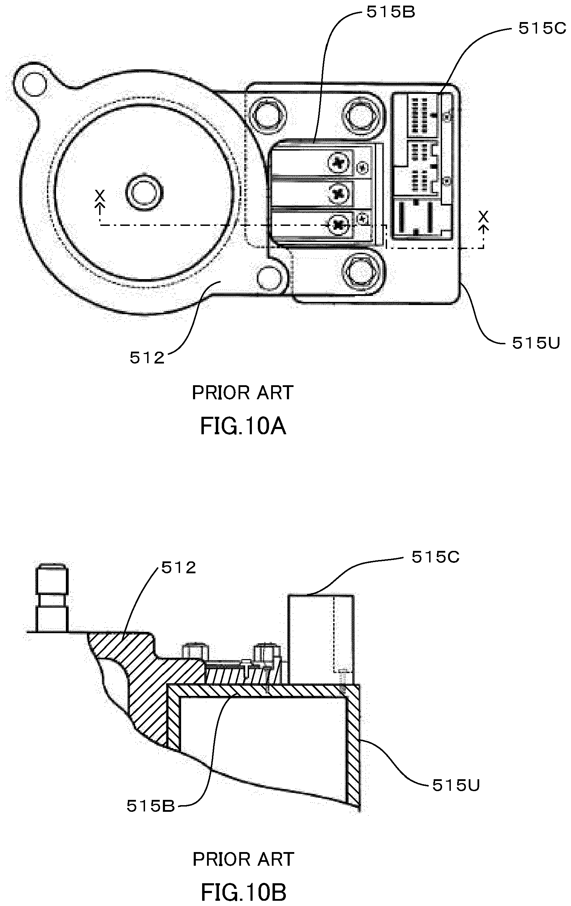

FIG.10A is a bottom surface illustrating a configuration of a control unit of a conventional motor, and FIG.10B is a cross sectional view taken along line X-X shown in FIG.10A.

### Mode for Carrying Out the Invention

Hereinafter, regarding a connection part between a motor and a control unit for the motor and a connection structure between the motor and the control unit using the connection part according to the present invention, an embodiment of the present invention is described using a configuration in which the connection part and the connection structure are applied to an electric power steering apparatus which is one of the kinds of an electric actuator used in a vehicle.

Here, the electric power steering apparatus is formed to apply a steering assist force (an assist force) to a steering mechanism of a vehicle by using rotational force of the motor, and a driving force of the motor is applied to a steering shaft or a rack shaft as the steering assist force by using a transmission mechanism such as gears, a belt or the like via a reduction mechanism. Further, such an electric power steering apparatus (EPS) performs a feedback control of a motor current in order to generate a torque of the steering assist force precisely.

Such the feedback control is performed to adjust a motor applied-voltage such that a difference between a steering assist command value (a current command value) and a motor current detected-value so as to be small, and the adjustment of the motor applied-voltage is generally performed with adjustment of a duty of a pulse width modulation (PWM) control.

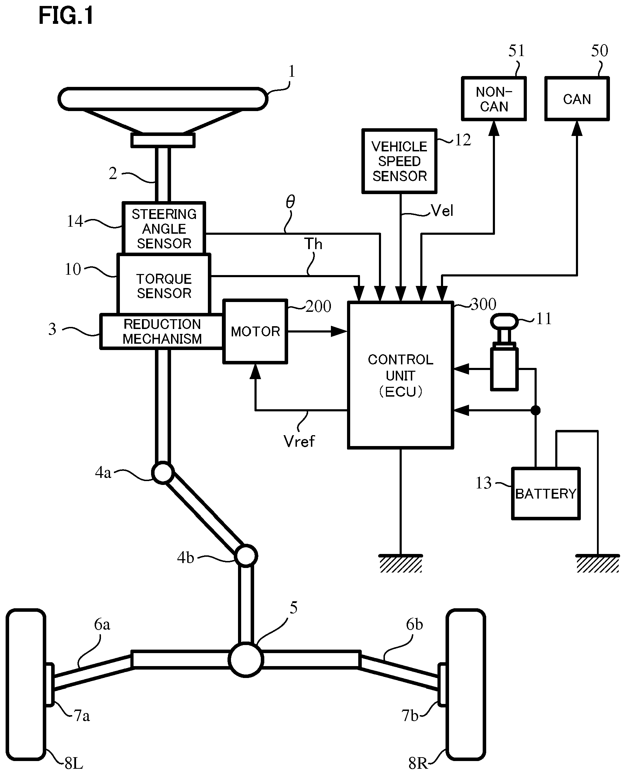

A general configuration of the electric power steering is described with reference to FIG.1. A column shaft (a steering shaft, a handle shaft) 2 of a handle 1 is connected to steered wheels 8L, 8R via reduction gears of a reduction mechanism 3, universal joints 4a and 4b, a pinion rack mechanism 5, tie rods 6a, 6b and hub units 7a, 7b. Further, a torque sensor 10 which detects a steering torque Th of the handle 1 and a steering angle sensor 14 which detects a steering angle θ are provided on the column shaft 2, and a motor 200 which assists a steering force of the handle 1 is connected to the column shaft 2 via the reduction gears (a gear ratio n) of the reduction mechanism 3.

In addition, a control unit (ECU) 300 serving as a control section which controls the electric power steering apparatus is formed by a micro control unit (MCU) as a key part, and an electric power is supplied from a battery 13 to the control unit 300 and an ignition signal is inputted into the control unit 300 via an ignition key 11.

In the control unit 300 formed in such a way, a calculation of the current command value for an assist (a steering assist) command is performed based on the steering torque Th detected by the torque sensor 10 and a vehicle speed Vel detected by a vehicle speed sensor 12, and the current to be supplied to the motor 200 is controlled by a voltage control command value Vref in which the current command value is subjected to a compensation or the like. As well, the steering angle sensor 14 is not necessarily provided, and therefore the steering angle sensor 14 may not be arranged, and the steering angle can be acquired by a rotational position sensor such as a resolver or the like connected to the motor 200.

Further, a CAN (Controller Area Network) 50 which receives various information of a vehicle is connected to the control unit 300, and the vehicle speed Vel can be also received from the CAN 50. Further, a Non-CAN 51 which receives communication other than the CAN 50, an analogue/digital signal, a radio wave or the like is also connected to the control unit 300.

Furthermore, in the electric power steering apparatus formed as described-above according to the embodiment of the present invention, a connection part and a connection structure for mounting the motor 200 and the control unit 300 for the motor 200 of the present invention are formed as below. As well, in the description below, the same numeral reference is assigned to the same component even if other aspect can be adopted, and therefore a repeated description thereof may be appropriately omitted.

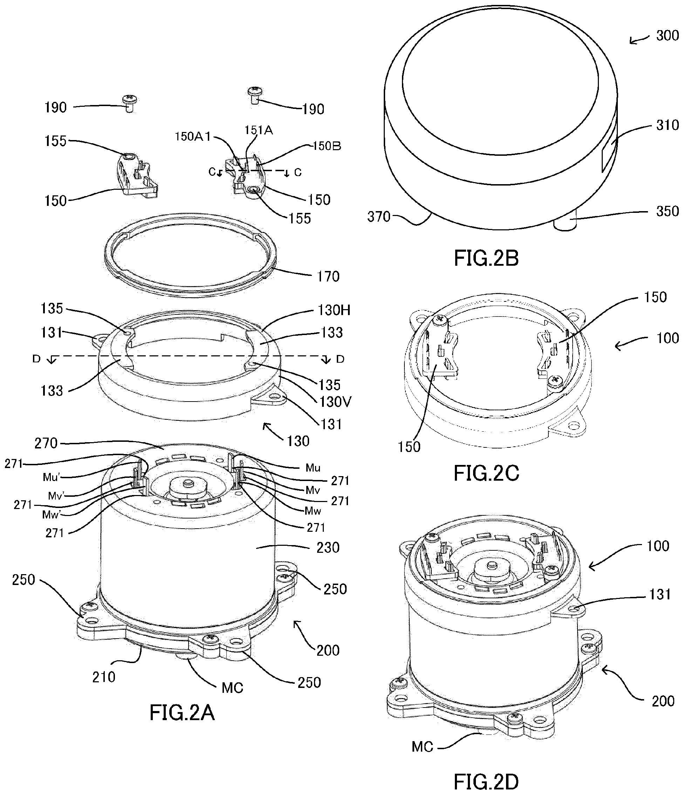

FIGs.2A through 2D relate to a connection part 100 which connects the motor 200 and the control unit 300 according to the present invention, and FIG.2A is a perspective view of each component of the motor 200 and the connection part 100, FIG.2B is a perspective view of the control unit 300, FIG.2C is a perspective view of the connection part 100, and FIG.2D is a perspective view illustrating a structure in which the connection part 100 and the motor 200 are assembled.

In the embodiment of the present invention, a housing of the motor 200 is formed in a substantially cylindrical shape, and a rotational shaft MC of the motor 200 arranged coaxially with a center axis of the cylindrical shape is protruded from one circular-shape end portion surface (a load-side surface) 210 which forms the cylindrical shape and the rotational shaft MC is connected to the reduction mechanism (not shown in FIGs.2A through 2D) being a load. Then, plural flanges 250 for connecting the motor 200 to the reduction mechanism or the like arranged at a load-side are formed on a side surface 230 of the cylindrical shape portion so as to be adjacent to the end portion surface 210.

Further, conductive terminals (Mu, Mv, Mw), (Mu', Mv', Mw') from the motor 200 are formed to be protruded from a connection surface 270 connected with the control unit 300 and formed as another circular shaped-end portion surface which forms the cylindrical shape.

The conductive terminals (Mu, Mv, Mw), (Mu', Mv', Mw') from the motor 200 are formed as, for example, rectangular bus bar terminals which are connected to a motor coil in the motor 200 to supply the electric power or the like to the motor coil. These terminals are erected to make one line along an outer periphery of a circle which forms the connection surface 270 at an inside of the outer periphery. As well, in the present embodiment here, hole portions 271 toward an inside of the motor 200 are formed on the connection surface 270 and the conductive terminals (Mu, Mv, Mw), (Mu', Mv', Mw') are formed to be erected above the surface through the hole portions 271 from a side of the motor coil inside the motor 200, however the conductive terminals (Mu, Mv, MW), (Mu', Mv', Mw') may be formed directly on the surface of the connection surface 270 of the housing of the motor 200 via an isolation member or the like arranged between the housing and the conductive terminals.

Further, the control unit 300 is connected to a side of the connection surface 270 of the motor 200 via the connection part 100. Here, an arbitrary shape may be adopted as an outer shape of the housing of the control unit 300, and therefore a cylindrical shape similar to the motor 200 as described in the present embodiment or, for example, a box shape with each surface formed in a rectangular shape may be adopted. However, the housing of the control unit 300 is necessary to have at least the connection surface 370 connected with the motor 200, and therefore it is necessary to arrange a connection-part corresponding part 350 capable of connecting with the connection part 100 to correspond to a mount-boss arranging portion 131 of the control unit 300 formed in the connection part 100 as described below. Further, a control terminal (not shown) is provided in the control unit 300 and the control terminal is connected to a conductive body (a bus bar terminal) installed in relay terminals 150 described below, however a configuration of the control terminal is not limited to a specific configuration, and therefore a configuration in which the control terminal is assembled and fitted with the conductive body to each other, or a configuration in which a window 310 is provided in the side surface of the control unit 300 and the control terminal arranged inside the housing of the control unit 300 is connected to a conductive body 151 installed in the relay terminals 150 through the window 310 by means of screwing, welding or the like may be adopted.

Furthermore, in the embodiment of the present invention, the connection part 100 is mainly provided with a control unit mounting flange 130, a rubber seal 170 serving as a waterproof and dustproof member, the relay terminals 150, relay-terminal fixing screws 190 and so on.

In this way, the present invention has a structure in which the connection part 100 is arranged between the connection surface 270 of the housing of the motor 200 and the connection surface 370 of the housing of the control unit 300 and the motor 200 and the control unit 300 are connected each other via the connection part 100.

The control unit mounting flange 130 in the components of the connection part 100 is formed in a ring shape as a whole, and its section has a substantially reversed L-shape formed by a plane extended in a rotational shaft direction of the motor 200 and a plane extended in a direction parallel to the connection surface 270 of the motor 200.

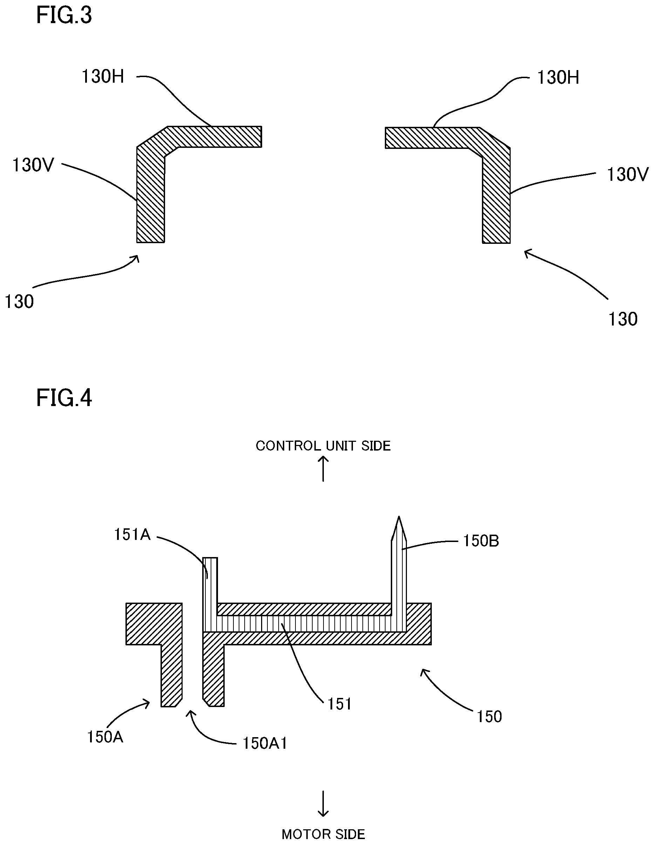

More specifically, as shown in a cross-section in FIG.3 taken along a line D-D in FIG.2A, an outer-edge portion side of a ring like shape is formed such that an outer edge portion of an end surface of a circular portion which forms the connection surface 270 of the housing of the motor 200 is covered from an outside toward an end portion of a cylindrical portion of the cylindrical shape and a section of a side 130V of the reversed L-shape is parallel to the cylindrical portion. Further, an inner edge portion of the ring like shape is formed such that an outer edge of the circular shaped connection surface 270 of the housing of the motor 200 is covered and a section of another side 130H of the reversed L-shape is parallel to the connection surface.

Further, the mount-boss arranging portions 131 for mounting the control unit 300 are provided at three portions so as to protrude from an outer edge portion of the ring shape further toward an outer side.

Furthermore, relay-terminal arranging portions 133 are provided on inner edge side portions of the ring shape of the control unit mounting flange 130 such that a portion of the inner edge portion is extended further toward an inner side. Then, since the relay-terminal arranging portions 133 are used for arranging the relay terminals 150 on the control unit mounting flange 130, screw holes 135 for mounting the relay terminals 150 are provided.

The relay terminals 150 in the connection part 100 are mounted to the control unit mounting flange 130 so as to electrically connect a conductive terminal formed to be protruded from a body of the motor 200 and a control terminal formed in the control unit 300 by means of relay and at the same time to mechanically connect the connection part 100 and the motor 200 by using the connection described-above.

Thus, as shown in FIGs.2A through 2D and a cross-section in FIG.4 taken along a line C-C in FIG.2A, the relay terminals 150 are respectively formed in a substantially plane shape made of synthetic resin or the like as a whole. The screw holes 155 for fixing the relay terminals 150 to the control unit mounting flange 130 by the relay-terminal fixing screws 190 are formed in the relay terminals 150 and a conductive body 151 for connecting the conductive terminal and the control terminal by means of relay is formed and embedded in the relay terminals 150 by a method of insert molding or the like.

Then, in the present embodiment, a bent bus bar terminal is used as the conductive body 151, and the bus bar terminal is embedded in the plane portions of the relay terminals 150 in accordance with the number of the conductive terminal as a target for the relay. Both ends of the bus bar terminal are formed to be protruded from the plane portion at a conductive-terminal connection portion 150A with the conductive terminal of the motor 200 and at a control-terminal connection portion 150B with the control terminal from the control unit 300.

The conductive-terminal connection portion 150A in the connection portions is formed as a portion to connect the bus bar terminal which forms the conductive body 151 and the conductive terminal of the motor 200, and the conductive-terminal connection portion 150A is formed in a hollow projection shape erected in a direction toward the conductive terminal of the motor 200 from a configuration on planes which form the relay terminals 150.

Then, a portion of the bus bar terminal 151 formed to be bent from the plane portion is exposed to a portion of an inner surface of a hollow portion 150A1 of the hollow projection portion. The bus bar terminal has a structure in which an end portion 151A is protruded toward a side of the control unit 300 which is opposite to a side where the projection shape is formed on the planes which form the relay terminals 150 while being along the inner surface of the hollow portion 150A1.

Further, in the present embodiment, the projection shape is formed in a rectangular column shape as a whole which has an outline of a rectangular shape when seen above the planes which form the relay terminals 150. The outline of the rectangular shape is formed to be matched with a shape of inner sides of the hole portions 271 to which the conductive terminal formed on the connection surface of the motor 200 is protruded.

Consequently, when the conductive terminal connection portion 150A of the relay terminals 150 is connected to the conductive terminal of the motor 200, the conductive terminal is inserted to the hollow portion 150A1 of the projection shape by fitting a portion of the projection shape of the conductive-terminal connection portion 150A into the hole portions 271 to which the conductive terminal formed on a joining surface of the motor 200 is protruded, and thereby the conductive terminal is formed to be protruded at a position adjacent to the bus bar terminal 151 from the plane portions which form the relay terminals 150 toward a direction of the control unit 300. As well, as described above, since it is necessary to form the conductive terminal to be protruded at the position adjacent to the bus bar terminal 151 from the plane portions which form the relay terminals 150 toward the direction of the control unit 300, a length of a protruding portion of the conductive terminal of the motor 200 is formed by considering a relationship between thickness of the relay terminals 150, the length of the protruding portion and so on.

Further, the control-terminal connection portion 150B in the connection part of the relay terminals is formed as a portion to connect the bus bar terminal which forms the conductive body and the control terminal of the control unit 300. Thus, the bus bar terminal 151 which forms the conductive body is erected to be bent toward a side of the control terminal of the control unit 300 from a configuration on the planes which form the relay terminals 150, and a position where the bus bar terminal 151 is erected is arranged in a radial direction away from the rotational shaft MC of the motor 200 when seen from the conductive terminal connection portion as a reference where the connection with the conductive terminal of the motor 200 is achieved. Accordingly, with such a configuration, in a case in which the motor 200 is connected via the connection part 100, the control-terminal connection portion 150B is arranged adjacent to the side surface 230 of the cylindrical portion of the cylindrical shape of the motor 200 with respect to the conductive terminal of the motor 200 when seen from the motor 200, and therefore even if the motor 200 having the connection part 100 is connected to the control unit 300, check or processing of the connection part 100 can be easily performed.

Furthermore, in the present embodiment, the rubber seal 170 is arranged as the waterproof and dustproof member on the control unit mounting flange 130. The rubber seal 170 is formed to perform waterproofing and dustproofing by means of sealing between components of the connection part 100 and the housing of the control unit 300 and between components of the motor 200 to which the connection part 100 is connected and the control unit 300 by pressing and fitting the rubber seal 170.

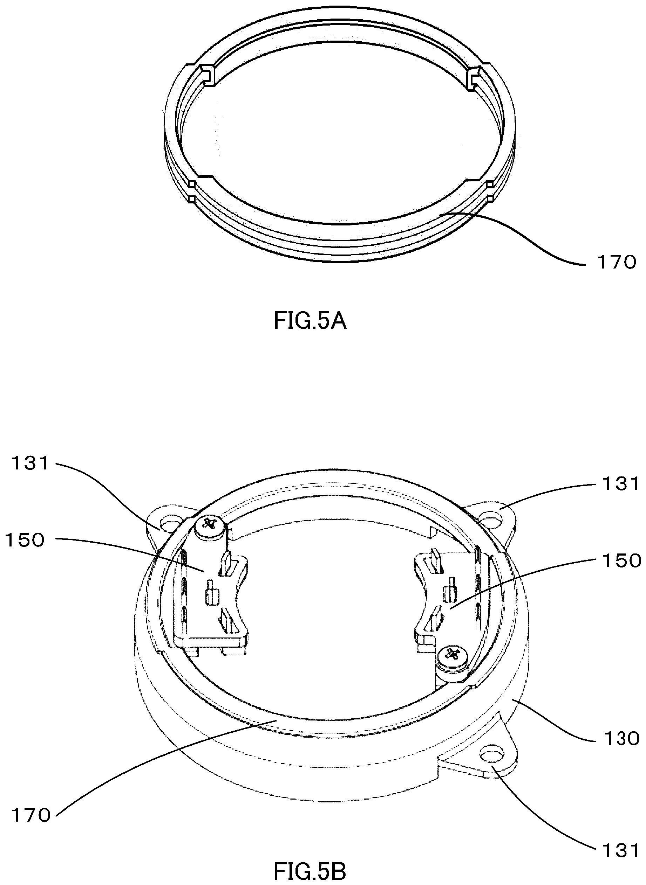

In this connection, as shown in a perspective view in FIG.5A, the rubber seal 170 is basically provided at a side of an inner edge of the control unit mounting flange 130. Further, the rubber seal 170 has a section of an U-shape with corners in which a portion contacting the inner edge of the flange 130 is formed as a middle side (a center side), other side is formed as a surface at a side of the control unit 300, and another side is formed as a surface at a side of the motor 200, and therefore the rubber seal 170 is formed in a ring shape as a whole. Furthermore, as shown in a perspective view in FIG.5B, the ring shape is formed such that it passes through a side of an outer edge of the relay terminal mounting flange 130 adjacent to a side of an outer periphery of the of the relay terminal 150.

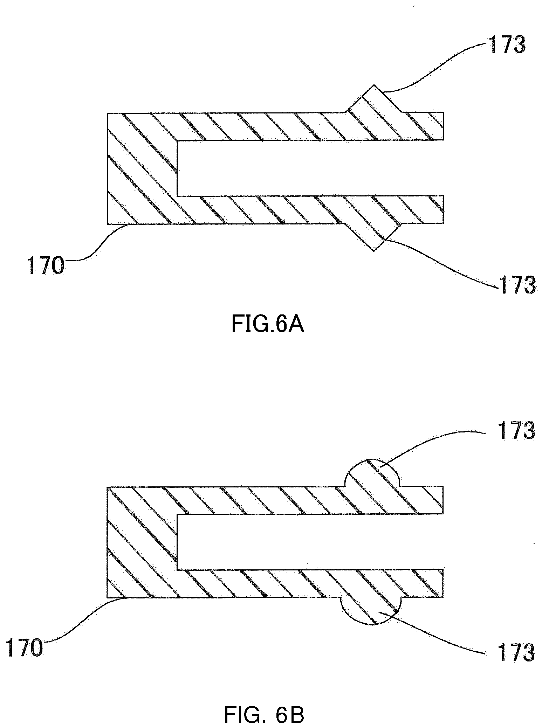

A projection 173 having a triangular section as shown in FIG.6A or a semicircular section as shown in FIG.6B may be arranged on each of the two surfaces except the middle side of the U-shape section with the corners of the rubber seal 170 so as to be protruded toward an outer side of each surface. Then, in a case in which such a configuration is adopted, when the rubber seal 170 is pressed and fitted from above and below the surface formed by the ring shape formed by the control unit mounting flange 130, much higher surface pressure can be secured and therefore sealing performance can be also improved.

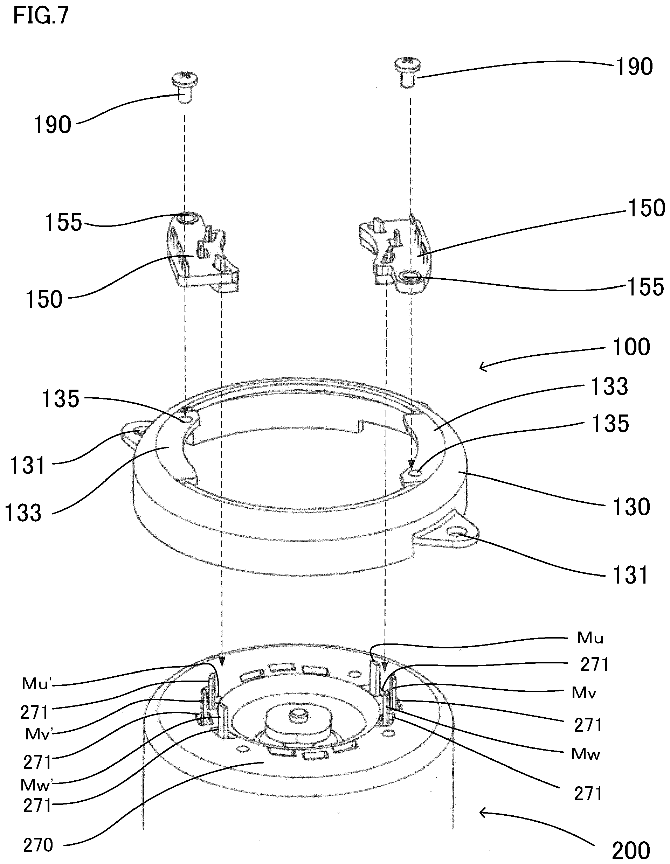

Next, a connection structure using the connection part 100 formed as described-above is described. FIG.7 is a perspective view illustrating a specific connection procedure between the connection part 100 and the motor 200. In the connection between the connection part 100 and the motor 200, at first, the relay terminals 150 are screwed and fixed to the relay terminal arranging portion 133 with respect to the control unit mounting flange 130 by means of the relay-terminal fixing screws 190 through screw holes 155 formed in the relay terminals 150. Then, when the connection part 100 formed in such a way is connected to the connection surface 270 of the motor 200, the portion of the projection shape of the conductive terminal connection portion 150A formed in the relay terminals 150 of the connection part 100 is positioned so as to correspond to the hole portions 271 to which the conductive terminals (Mu, Mv, Mw), (Mu', Mv', Mw') are protruded formed on the connection surface 270 of the motor 200, and thereafter the position of the projection portion is fixed by fitting the projection portion into the hole portion 271.

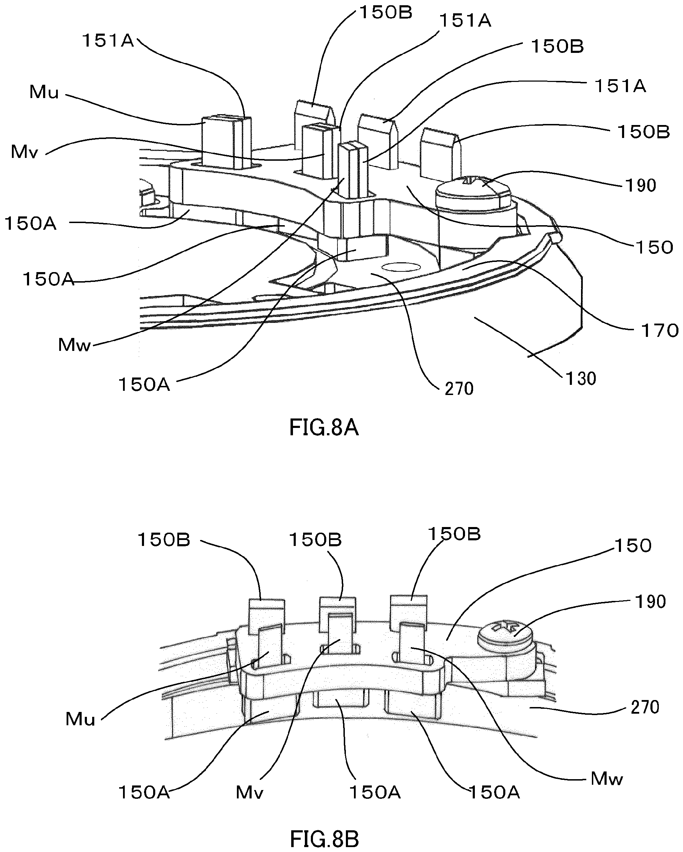

FIGs.8A and 8B are perspective views in a state in which a relay terminal portion of the joining member is fitted to the conductive terminal portion of the motor 200 in such a way, when seen from respectively different directions. As shown in FIGs.8A and 8B, when the relay terminal portion of the connection part 100 is fitted to the hole portion 271 to which the conductive terminal of the joining surface of the motor 200 is protruded, the conductive terminal is inserted into the hollow portion 150A1 of the projection shape of the relay terminal, and thereby the conductive terminal is protruded at a position adjacent to the end portion 151A of the bus bar terminal of the relay terminal 150 from the plane portion which forms the relay terminal toward a direction of the control unit 300. Thus, the projection portion of the relay terminal 150 is entered into between the inner edge side of the hole portion 271 of the connection surface 270 of the motor 200 and the conductive terminal as described above, and thereby a structure in which the inner edge side of the hole portion 271 formed on the joining surface and the conductive terminal are isolated by the conductive-terminal connection portion 150A of the relay terminal 150 can be obtained.

As well, in the present embodiment, the conductive-terminal connection portion 150A has the hollow projection shape as described above, and thereby a basic configuration in which the conductive terminal of the motor 200 is inserted into the hollow portion 150A1 so as to be surrounded is adopted. Thus, even if a structure in which the conductive terminal of the motor 200 is not formed inside the hole portion of the joining surface but protruded directly from the joining surface is adopted, when the relay terminals 150 are connected, the protrusion portion is surrounded and thereby the protrusion portion can be protected and isolated.

In addition, as a result of that the structure as described above is formed, the conductive terminal portion of the motor 200 is protruded at the position adjacent to the end portion 151A of the bus bar terminal of the relay terminal from the plane portion which forms the relay terminal toward the direction of the control unit 300 as described above. Thus, by joining the conductive terminal of the motor 200 protruded to be adjacent to the bus bar terminal 151 in such a way and the bus bar terminal 151 of the relay terminal by means of welding, the electrical joining and the mechanical joining between the connection part 100 and the motor 200 can be simultaneously achieved. As well, here, the joining between the conductive terminal and the bus bar terminal of the relay terminal 150 can be welded by a method of TIG (Tungsten Inert Gas)-welding, resistance welding or the like, and further another method such as pressure joining, soldering or the like other than the welding can be adopted.

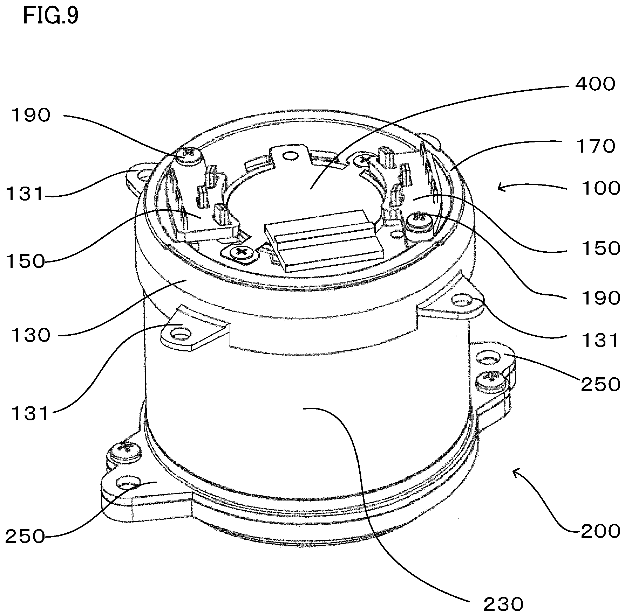

Further, in order to enhance a mechanical joining strength, the following mutual connection is further applied to the connection part 100 and the motor 200 connected with each other as described above. Namely, when the relay terminal portion of the connection part 100 is fitted into the conductive terminal portion of the motor 200, the control unit mounting flange 130 of the connection part 100 is fitted and fixed to a side of the connection surface 270 of the motor 200 by means of light pressing together with the positioning between the relay terminal and the conductive terminal as shown in FIG.9. Thus, the outer edge of the connection part 100 fitted in such a way and the side surface 230 of the motor 200 are fixed by means of welding, and thereby the mechanical joining strength can be enhanced. As well, at this time, instead of the fixing method as described above, a bead is formed on an inner side of the housing of the motor 200 through the control unit mounting flange 130, and thereby pressing and fixing can be also adopted.

Furthermore, in the present invention, when the connection part 100 is connected to the motor 200 or the like, a space can be secured in a connection portion thereof, and for example as shown in FIG.9, a structure in which a resolver 400 is arranged at a center portion of the connection surface 270 of the motor 200 can be adopted. Thus, when the resolver 400 or the like is arranged on the housing of the motor 200 as described above, in order to secure position accuracy with the motor shaft MC, the resolver 400 or the like is not fixed to the control unit mounting flange 130, and therefore an area considering a region for mounting the resolver 400 or the like and adjusting a phase of the resolver 400 can be secured in a circular ring of the control unit mounting flange 130.

Then, in a case in which such a configuration is adopted, regardless of the existence of the connection between the connection part 100 and the motor 200, attaching/detaching of the resolver 400 or the like to/from the motor 200 and adjusting of the resolver 400 or the like to the motor 200 can be performed.

Further, the connection of the motor 200 to which the connection part 100 is connected to the control unit 300 is performed by a method in which the connection- part corresponding portion 350 of the control unit 300 is connected to the mount-boss arranging portion 131 formed in the control unit mounting flange 130 of the connection part 100 by means of screwing or the like.

Then, when the connection described above is performed, the control terminal connection part 150B formed so as to be protruded toward the relay terminals 150 of the connection part 100 is connected to the conductive terminal of the control unit 300 arranged in advance so as to correspond to the control terminal connection portion 150B by means of a method of fitting, screwing, welding or the like.

As described above, according to the connection part and the connection structure of the present invention, the connection between the motor and the control unit of the motor is performed via a single connection part in which the control unit mounting flange and the relay terminal are mainly formed integrally, and thereby the electrical connection and the mechanical connection can be performed efficiently by the connection part formed as the single member and deterioration of the position accuracy due to progressive accumulation of a mounting error can be prevented and the connection between the motor and the control unit of the motor can be more precisely and efficiently performed.

Further, a configuration of the present invention is not limited to a configuration of the embodiment described above, and various aspects can be adopted within a scope of the subject matter of the present invention. Thus, for example, the relay terminal of the connection member of the embodiment of the present invention is arranged at the side of the control unit with respect to the control unit mounting flange, however the relay terminal can be arranged at a side of the motor, and in such a case, the control unit mounting flange can be mounted to the relay terminal after the relay terminal is connected to the motor.

Further, the connection of the relay terminal to the control unit mounting flange is not limited to screwing as described in the present embodiment, and the connection may be achieved by means of caulking or the like.

### Explanation of Reference Numerals

- 1: handle
- 2: column shaft (steering shaft, handle shaft)
- 3: reduction mechanism
- 4a, 4b: universal joint
- 5: pinion rack mechanism
- 6a, 6b: tie rod
- 7a, 7b: hub unit
- 8L, 8R: steered wheel
- 10: torque sensor
- 11: ignition key
- 12: vehicle speed sensor
- 13: battery
- 14: steering angle sensor
- 100: connection part(s)
- 130: control unit mounting flange
- 130V: a side of reversed L-shape
- 130H: another side of reversed L-shape
- 131: mount-boss arranging portion
- 133: relay-terminal arranging portion
- 135: screw hole
- 150: relay terminal
- 150A: conductive-terminal connection portion
- 150A1: hollow portion
- 150B: control-terminal connection portion
- 151: conductive body (bus bar terminal)
- 151A: end portion
- 155: screw hole
- 170: rubber seal (waterproof and dustproof member)
- 173: projection
- 190: relay-terminal fixing screw
- 200: motor (electric motor)
- 210: end portion surface (load-side surface)
- 230: side surface
- 250: flange
- 270: connection surface (control unit side)
- 271: hole portion
- 300: control unit (ECU)
- 310: window
- 350: connection-part corresponding part
- 370: connection surface (motor side)
- 400: resolver
- Mu, Mv, Mw, Mu', Mv', Mw': conductive terminal
- MC: motor rotational shaft

## Claims

1. A connection part (100) for connecting a motor (200) and a control unit (300) for said motor (200), and said connection part (100) comprising:
a ring-shape control unit mounting flange (130); and
a relay terminal (150) to be mounted at an inner edge side of said ring-shape control unit mounting flange (130);
wherein said relay terminal (150) comprises a conductive body (151) which electrically connects a conductive terminal formed to be protruded from said motor (200) and a control terminal of said control unit (300), and a protection section which surrounds a periphery of said conductive terminal formed to be protruded from said motor (200); and **characterised by** a ring-shape waterproof and dustproof member (170) coaxially arranged with said ring-shape control unit mounting flange (130) is provided at said inner edge side of said control unit mounting flange (130), and said ring-shape waterproof and dustproof member (170) is formed so as to pass through an outer edge side of said relay terminal (150) in a portion of said relay terminal (150) to be mounted at said inner edge side.

2. A connection structure of a motor (200) for connecting one connection surface (270) of a housing of said motor (200) and one connection surface (370) of a housing of a control unit (300) which controls said motor (200),
wherein a conductive terminal (Mu, Mv, Mw, Mu', Mv', Mw') of said motor (200) is provided to be protruded on said connection surface (270) of said motor (200), and
wherein said connection part (100) according to Claim 1 is connected to said conductive terminal (Mu, Mv, Mw, Mu', Mv', Mw') via one end of a conductive body (51) of a relay terminal (150) of said connection part (100), and said connection part (100) is connected to said one connection surface (270) of said housing of said motor (200) so as to connect said motor (200) and said control unit (300).

3. A connection structure between a motor (200) and a control unit (300) of said motor for connecting one connection surface (270) of a housing of said motor (200) and one connection surface (370) of a housing of said control unit which controls said motor (200),
wherein a conductive terminal (Mu, Mv, Mw, Mu', Mv', Mw') of said motor (200) is provided to be protruded on said connection surface (270) of said motor (200),
wherein said connection part (100) according to Claim 1 is connected to said conductive terminal (Mu, Mv, Mw, Mu', Mv', Mw') via one end of a conductive body (51) of a relay terminal (150) of said connection part (100) and is connected to said one connection surface (270) of said housing of said motor (200),
wherein another end of said conductive body (51) of said relay terminal (150) is arranged to be protruded toward said control unit (300) and the other end of said conductive body (51) is connected to a control terminal of said control unit (300), and
wherein said housing of said control unit (300) is connected to said connection part (100) at said one connection surface (370) of said housing of said control unit (300).

4. An electric power steering apparatus comprising said connection part (100) for connecting said motor (200) and said control unit (300) of said motor (200) according to Claim 1.

5. An electric power steering apparatus comprising said connection structure according to Claim 2 or 3.

6. An electric actuator comprising said connection part (100) for connecting said motor (200) and said control unit (300) of said motor (200) according to Claim 1.

7. An electric actuator comprising said connection structure according to Claim 2 or 3.

8. A vehicle comprising said connection part (100) for connecting said motor (200) and said control unit (300) of said motor (200) according to Claim 1.

9. A vehicle comprising said connection structure according to Claim 2 or 3.

## Patentansprüche

1. Verbindungsteil (100) zum Verbinden eines Motors (200) und einer Steuereinheit (300) für den Motor (200), und wobei das Verbindungsteil (100) umfasst:
einen ringförmigen Steuereinheit-Montageflansch (130); und
einen Relaisanschluss (150), der an einer inneren Kantenseite des ringförmigen Steuergerät-Montageflansches (130) zu montieren ist;
wobei der Relaisanschluss (150) einen leitenden Körper (151), der einen leitenden Anschluss, der so gebildet ist, dass er aus dem Motor (200) vorsteht, und einen Steueranschluss der Steuereinheit (300) elektrisch verbindet, und einen Schutzabschnitt umfasst, der einen Umfang des leitenden Anschlusses, der so gebildet ist, dass er aus dem Motor (200) hervorsteht, umgibt; und **dadurch gekennzeichnet ist, dass**
ein ringförmiges wasser- und staubdichtes Element (170), das koaxial mit dem ringförmigen Steuergerät-Montageflansch (130) angeordnet ist, an der inneren Kantenseite des Steuergerät-Montageflansches (130) vorgesehen ist und das ringförmige wasser- und staubdichte Element (170) so gebildet ist, dass es durch eine äußere Kantenseite des Relaisanschlusses (150) in einem Bereich des Relaisanschlusses (150) hindurchgeht, der an der inneren Kantenseite zu montieren ist.

2. Verbindungsstruktur eines Motors (200) zum Verbinden einer Verbindungsfläche (270) eines Gehäuses des Motors (200) und einer Verbindungsfläche (370) eines Gehäuses einer Steuereinheit (300), die den Motor (200) steuert,
wobei ein leitender Anschluss (Mu, Mv, Mw, Mu', Mv', Mw') des Motors (200) so vorgesehen ist, dass er auf der Verbindungsfläche (270) des Motors (200) vorsteht, und
wobei der Verbindungsteil (100) nach Anspruch 1 über ein Ende eines leitenden Körpers (51) eines Relaisanschlusses (150) des Verbindungsteils (100) mit dem leitenden Anschluss (Mu, Mv, Mw, Mu', Mv', Mw') verbunden ist und der Verbindungsteil (100) mit der einen Verbindungsfläche (270) des Gehäuses des Motors (200) verbunden ist, um den Motor (200) und die Steuereinheit (300) zu verbinden.

3. Verbindungsstruktur zwischen einem Motor (200) und einer Steuereinheit (300) des Motors zum Verbinden einer Verbindungsfläche (270) eines Gehäuses des Motors (200) und einer Verbindungsfläche (370) eines Gehäuses der Steuereinheit, die den Motor (200) steuert,
wobei ein leitender Anschluss (Mu, Mv, Mw, Mu', Mv', Mw') des Motors (200) so vorgesehen ist, dass er auf der Verbindungsfläche (270) des Motors (200) vorsteht,
wobei der Verbindungsteil (100) nach Anspruch 1 über ein Ende eines leitenden Körpers (51) eines Relaisanschlusses (150) des Verbindungsteils (100) mit dem leitenden Anschluss (Mu, Mv, Mw, Mu', Mv', Mw') verbunden ist und mit der einen Verbindungsfläche (270) des Gehäuses des Motors (200) verbunden ist,
wobei ein anderes Ende des leitenden Körpers (51) des Relaisanschlusses (150) so angeordnet ist, dass es in Richtung der Steuereinheit (300) vorsteht, und das andere Ende des leitenden Körpers (51) mit einem Steueranschluss der Steuereinheit (300) verbunden ist, und
wobei das Gehäuse der Steuereinheit (300) mit dem Verbindungsteil (100) an der einen Verbindungsfläche (370) des Gehäuses der Steuereinheit (300) verbunden ist.

4. Elektrische Servolenkungsvorrichtung, umfassend das Verbindungsteil (100) zum Verbinden des Motors (200) und der Steuereinheit (300) des Motors (200) nach Anspruch 1.

5. Elektrische Servolenkungsvorrichtung, umfassend die Verbindungsstruktur nach Anspruch 2 oder 3.

6. Elektrisches Stellglied, umfassend das Verbindungsteil (100) zum Verbinden des Motors (200) und der Steuereinheit (300) des Motors (200) nach Anspruch 1.

7. Elektrisches Stellglied, umfassend die Verbindungsstruktur nach Anspruch 2 oder 3.

8. Fahrzeug, umfassend das Verbindungsteil (100) zum Verbinden des Motors (200) und der Steuereinheit (300) des Motors (200) nach Anspruch 1.

9. Fahrzeug, umfassend die Verbindungsstruktur nach Anspruch 2 oder 3.

## Revendications

1. Pièce de connexion (100) permettant de connecter un moteur (200) et une unité de commande (300) pour ledit moteur (200), et ladite pièce de connexion (100) comprenant :
une bride de montage d'unité de commande annulaire (130) ; et
une borne de relais (150) destinée à être montée sur un côté de bord intérieur de ladite bride de montage d'unité de commande annulaire (130) ;
dans laquelle ladite borne de relais (150) comprend un corps conducteur (151) qui connecte électriquement une borne conductrice formée pour être en saillie depuis ledit moteur (200) et une borne de commande de ladite unité de commande (300), et une section de protection qui entoure une périphérie de ladite borne conductrice formée pour être en saillie depuis ledit moteur (200) ; et **caractérisée en ce que**
un élément annulaire étanche à l'eau et étanche aux poussières (170) agencé de manière coaxiale avec ladite bride de montage d'unité de commande annulaire (130) est fourni sur ledit côté de bord intérieur de ladite bride de montage d'unité de commande annulaire (130), et ledit élément annulaire étanche à l'eau et étanche aux poussières (170) est formé de façon à traverser un côté de bord extérieur de ladite borne de relais (150) dans une partie de ladite borne de relais (150) destinée à être montée sur ledit côté de bord intérieur.

2. Structure de connexion d'un moteur (200) permettant de connecter une surface de connexion (270) d'un logement dudit moteur (200) et une surface de connexion (370) d'un logement d'une unité de commande (300) qui commande ledit moteur (200),
dans laquelle une borne conductrice (Mu, Mv, Mw, Mu', Mv', Mw') dudit moteur (200) est fournie pour être en saillie sur ladite surface de connexion (270) dudit moteur (200), et
dans laquelle ladite pièce de connexion (100) selon la revendication 1 est connectée à ladite borne conductrice (Mu, Mv, Mw, Mu', Mv', Mw') par une extrémité d'un corps conducteur (51) d'une borne de relais (150) de ladite pièce de connexion (100), et ladite pièce de connexion (100) est connectée à ladite une surface de connexion (270) dudit logement dudit moteur (200) de façon à connecter ledit moteur (200) et ladite unité de commande (300).

3. Structure de connexion entre un moteur (200) et une unité de commande (300) dudit moteur permettant de connecter une surface de connexion (270) d'un logement dudit moteur (200) et une surface de connexion (370) d'un logement de ladite unité de commande qui commande ledit moteur (200),
dans laquelle une borne conductrice (Mu, Mv, Mw, Mu', Mv', Mw') dudit moteur (200) est fournie pour être en saillie sur ladite surface de connexion (270) dudit moteur (200),
dans laquelle ladite pièce de connexion (100) selon la revendication 1 est connectée à ladite borne conductrice (Mu, Mv, Mw, Mu', Mv', Mw') par une extrémité d'un corps conducteur (51) d'une borne de relais (150) de ladite pièce de connexion (100) et est connectée à ladite une surface de connexion (270) dudit logement dudit moteur (200),
dans laquelle une autre extrémité dudit corps conducteur (51) de ladite borne de relais (150) est agencée pour être en saillie vers ladite unité de commande (300) et l'autre extrémité dudit corps conducteur (51) est connectée à une borne de commande de ladite unité de commande (300), et
dans laquelle ledit logement de ladite unité de commande (300) est connecté à ladite partie de connexion (100) au niveau de ladite une surface de connexion (370) dudit logement de ladite unité de commande (300).

4. Appareil de direction assistée électrique comprenant ladite pièce de connexion (100) pour connecter ledit moteur (200) et ladite unité de commande (300) dudit moteur (200) selon la revendication 1.

5. Appareil de direction assistée électrique comprenant ladite structure de connexion selon la revendication 2 ou 3.

6. Actionneur électrique comprenant ladite pièce de connexion (100) pour connecter ledit moteur (200) et ladite unité de commande (300) dudit moteur (200) selon la revendication 1.

7. Actionneur électrique comprenant ladite structure de connexion selon la revendication 2 ou 3.

8. Véhicule comprenant ladite pièce de connexion (100) pour connecter ledit moteur (200) et ladite unité de commande (300) dudit moteur (200) selon la revendication 1.

9. Véhicule comprenant ladite structure de connexion selon la revendication 2 ou 3.
